(19) 

**Europäisches Patentamt**
**European Patent Office**
**Office européen des brevets**

(11) **EP 4 571 245 A1**

(12) **EUROPEAN PATENT APPLICATION**
published in accordance with Art. 153(4) EPC

(43) Date of publication:
**18.06.2025 Bulletin 2025/25**

(21) Application number: **23852440.9**

(22) Date of filing: **01.08.2023**

(51) International Patent Classification (IPC):
*G01C 3/00* (2006.01)   *G01C 3/06* (2006.01)
*G05D 1/20* (2024.01)   *G06T 7/70* (2017.01)

(52) Cooperative Patent Classification (CPC):
**G01C 3/00; G01C 3/06; G06T 7/70**

(86) International application number:
**PCT/JP2023/028139**

(87) International publication number:
**WO 2024/034469 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022 JP 2022129066**

(71) Applicant: **Kyocera Corporation
Kyoto-shi, Kyoto 612-8501 (JP)**

(72) Inventor: **HOSHINO, Koichi
Kyoto-shi, Kyoto 612-8501 (JP)**

(74) Representative: **Viering, Jentschura & Partner
mbB
Patent- und Rechtsanwälte
Am Brauhaus 8
01099 Dresden (DE)**

(54) **INFORMATION PROCESSING DEVICE, INFORMATION PROCESSING METHOD, AND PROGRAM**

(57) An information processing apparatus includes a controller configured to acquire data representing a first image and data representing a second image. The first image and the second image are generated by an imaging device in respective attitudes that differ from each other. The controller is configured to acquire an amount of change in an attitude of a range finder based on an amount of change in the attitude of the imaging device. The attitude of the range finder is linked to the attitude of the imaging device. The amount of change in the attitude of the imaging device is calculated based on positions of a same subject in the first image and in the second image.

FIG. 4

```
                    START

RECEIVE FIRST IMAGE (T_{N-1}) AND POINT-SET DATA        S1

RECEIVE SECOND IMAGE (T_N) AND POINT-SET DATA           S2

APPLY TEMPLATE MATCHING PROCESS                         S3

ACQUIRE AMOUNT OF SHIFT dx_N AND AMOUNT OF SHIFT dy_N   S4

DERIVE ROTATION ANGLE θ_{PN} AND ROTATION ANGLE θ_{YN}  S5

CONVERT POSITIONAL INFORMATION OF OBJECT
IN LOCAL COORDINATE SYSTEM INTO POSITIONAL
INFORMATION IN WORLD COORDINATE SYSTEM                  S6
(GENERATE ENVIRONMENT MAP)

SUBSTITUTE SECOND IMAGE FOR FIRST IMAGE
[SECOND IMAGE (T_N) → FIRST IMAGE (T_{N-1})]            S7
```

EP 4 571 245 A1

**Description**

CROSS-REFERENCE TO RELATED APPLICATIONS

This application claims priority from Japanese Patent Application No. 2022-129066 (filed August 12, 2022), the content of which is all incorporated herein by reference.

TECHNICAL FIELD

The present disclosure relates to an information processing apparatus, a method of processing information, and a program.

BACKGROUND OF INVENTION

Technologies to generate an environment map from data acquired using a range finder, such as a LiDAR (light detection and ranging), are known in the related art (refer to Patent Literature 1).

CITATION LIST

PATENT LITERATURE

Patent Literature 1: Japanese Unexamined Patent Application Publication No. 2020-86678

SUMMARY

In an embodiment of the present disclosure, an information processing apparatus includes
a controller configured to acquire data representing a first image and data representing a second image, the first image and the second image being generated by an imaging device in respective attitudes that differ from each other.
The controller is configured to acquire an amount of change in an attitude of a range finder based on an amount of change in the attitude of the imaging device, the attitude of the range finder being linked to the attitude of the imaging device, the amount of change in the attitude of the imaging device being calculated based on positions of a same subject in the first image and in the second image.
In an embodiment of the present disclosure, a method of processing information includes

acquiring data representing a first image and data representing a second image, the first image and the second image being generated by an imaging device in respective attitudes that differ from each other, and
acquiring an amount of change in an attitude of a range finder based on an amount of change in the attitude of the imaging device, the attitude of the range finder being linked to the attitude of the imaging device, the amount of change in the attitude of the imaging device being calculated based on positions of a same subject in the first image and in the second image.

In an embodiment of the present disclosure, a program causes a computer to execute a process, the process including

acquiring data representing a first image and data representing a second image, the first image and the second image being generated by an imaging device in respective attitudes that differ from each other, and
acquiring an amount of change in an attitude of a range finder based on an amount of change in the attitude of the imaging device, the attitude of the range finder being linked to the attitude of the imaging device, the amount of change in the attitude of the imaging device being calculated based on positions of a same subject in the first image and in the second image.

BRIEF DESCRIPTION OF THE DRAWINGS

FIG. 1 is a block diagram of a generation system according to an embodiment of the present disclosure.
FIG. 2 illustrates a template matching process.
FIG. 3 illustrates a setting for a template picture.

FIG. 4 is a flowchart indicating an example of procedures of a method of processing information.

DESCRIPTION OF EMBODIMENTS

A technology is desired to accurately deduce information regarding an attitude of a range finder. For example, information regarding the attitude of the range finder is used to generate an environment map. Capability of accurately deducing information regarding the attitude of the range finder enables accurate generation of an environment map. In an embodiment of the present disclosure, a technology is provided to accurately deduce information regarding the attitude of the range finder.

Description will be given below with regard to an embodiment according to the present disclosure with reference to the drawings.

(Configuration of Generation System)

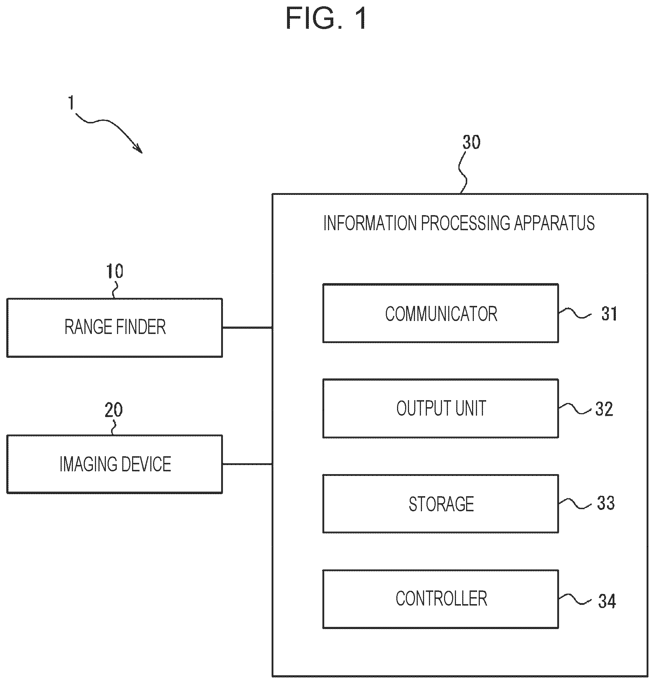

A generation system 1 as illustrated in FIG. 1 is able to generate an environment map. For example, the generation system 1 is included in or carried by a mobile unit. Examples of a mobile unit include an automobile, a robot, and a person. A mobile unit is not limited to these examples.

The generation system 1 includes a range finder 10, an imaging device 20, and an information processing apparatus 30. The range finder 10 and the imaging device 20 are able to communicate with the information processing apparatus 30 via a communication line. The information processing apparatus 30 is not necessarily included in or carried by the mobile unit. In such a case, the information processing apparatus 30 may be able to communicate with the range finder 10 and the imaging device 20 included in or carried by the mobile unit.

The attitude of the range finder 10 and an attitude of the imaging device 20 are linked to each other. In one example, the range finder 10 and the imaging device 20 may be fixed to each other. Since the range finder 10 and the imaging device 20 are fixed to each other, linking the attitude of the range finder 10 and the attitude of the imaging device 20 is possible. Since the range finder 10 and the imaging device 20 are fixed to each other, the position and the attitude of the range finder 10 and the position and the attitude of the imaging device 20 are allowed to be determined in relation to each other. The range finder 10 and the imaging device 20 may be fixed to the mobile unit so that the position and the attitude of the range finder 10 and the position and the attitude of the imaging device 20 are fixed in relation to each other.

The range finder 10 includes, for example, a LiDAR. The range finder 10 is configured to emit an electromagnetic wave to a real space surrounding the range finder 10. The electromagnetic wave emitted by the range finder 10 is reflected by an object and returns to the range finder 10 as a reflected wave. The range finder 10 is configured to detect an electromagnetic wave, that is, the reflected wave, that returns after the emitted electromagnetic wave is reflected by the object. The range finder 10 is configured to measure a distance to the object by directly measuring a period from the emission of the electromagnetic wave to the detection of the reflected wave of the emitted electromagnetic wave.

The range finder 10 is able to generate point-set data (positional data) by scanning the real space surrounding the range finder 10 using the electromagnetic wave and detecting the reflected wave of the electromagnetic wave. The point-set data indicates a position of an object located around the range finder 10. For example, the point-set data is a set of points indicating a position of an object in a three-dimensional real space. The point-set data may contain positional information of an object in the three-dimensional space and information indicating a distance from the range finder 10 to the object. **In** the point-set data, the positional information of an object in the three-dimensional space is represented in a local coordinate system with reference to the position of the range finder 10. **In** an embodiment, the local coordinate system is an XYZ coordinate system including an X-axis direction, a Y-axis direction, and a Z-axis direction perpendicular to each other. The positional information in the local coordinate system is represented by (X, Y, Z). **In** an embodiment, the origin of the local coordinate system is located at the position of the range finder 10. **In** an embodiment, point-set data contains positional information of an object in the local coordinate system (X, Y, Z) and information indicating a distance to the object from the position of the range finder 10, that is, the origin of the local coordinate system. The point-set data may contain either the positional information of an object in the local coordinate system or the information indicating the distance from the range finder 10 to the object. For example, the point-set data contains distance information for one frame. The distance information for one frame is obtained by scanning once a measurement range that will be described below. The range finder 10 may generate point-set data at any frame rate. The range finder 10 is configured to, after generating the point-set data, transmit the generated point-set data to the information processing apparatus 30.

Hereinafter, a region in the real space to which the range finder 10 is configured to emit an electromagnetic wave to generate point-set data is also referred to as a "measurement range".

The imaging device 20 includes imaging optics and an imaging element. The imaging device 20 is able to generate an image by capturing the real space surrounding the imaging device 20. A two-dimensional coordinate system is defined for the image. In an embodiment, the two-dimensional coordinate system defined for the image is an xy coordinate system including an x-axis direction and a y-axis direction perpendicular to each other. The x-axis direction corresponds to a horizontal direction. The horizontal direction is perpendicular to a vertical direction. The y-axis direction corresponds to a direction perpendicular to the horizontal direction.

The imaging device 20 may generate images at any frame rate. The frame rate for the imaging device 20 may be the same as or different from the frame rate for the range finder 10. The imaging device 20 is configured to, after generating an image, transmit the generated image to the information processing apparatus 30.

Hereinafter, a region in the real space captured by the imaging device 20 to generate an image is also referred to as an "imaging range". The imaging range partially overlaps the measurement range of the range finder 10. The imaging range of the imaging device 20 need not overlap the measurement range of the range finder 10. Alternatively, the whole of the imaging range of the imaging device 20 may overlap the measurement range of the range finder 10, or the whole of the measurement range of the range finder 10 may overlap the imaging range of the imaging device 20.

Examples of the information processing apparatus 30 include a computer. The information processing apparatus 30 may be a computer of any type, such as a general-purpose computer, a workstation, or a dedicated computer.

The information processing apparatus 30 includes a communicator 31, an output unit 32, a storage 33, and a controller 34.

The communicator 31 includes at least one communication module able to communicate with the range finder 10 and the imaging device 20 via the communication line. The at least one communication module supports a standard on the communication line. The communication line includes at least any one of a wireline communication line or a wireless communication line.

The communicator 31 may include at least one communication module able to communicate with another system in the mobile unit including or carrying the generation system 1. The at least one communication module supports a standard on the communication between the information processing apparatus 30 and the other system.

The output unit 32 is able to output data. The output unit 32 includes at least one output interface able to output data. Examples of the at least one output interface include a display. The output unit 32 may include a device or the like able to output information to an external storage medium.

The storage 33 includes at least one semiconductor memory, at least one magnetic memory, at least one optical memory, or a combination of at least two types of these memories. Examples of the at least one semiconductor memory include a RAM (random access memory) and a ROM (read only memory). Examples of the RAM include an SRAM (static random access memory) and a DRAM (dynamic random access memory). Examples of the ROM include an EEPROM (electrically erasable programmable read only memory). The storage 33 may serve as a main storage device, an auxiliary storage device, or a cache memory. The storage 33 is configured to store data to be used for operation of the information processing apparatus 30 and data obtained by operation of the information processing apparatus 30.

The controller 34 includes at least one processor, at least one dedicated circuit, or a combination thereof. Examples of the at least one processor include a general-purpose processor, such as a CPU (central processing unit) or a GPU (graphics processing unit), and a dedicated processor configured to specialize in specific processing. Examples of the at least one dedicated circuit include an FPGA (field-programmable gate array) and an ASIC (application specific integrated circuit). The controller 34 is configured to perform a process concerning the operation of the information processing apparatus 30 while controlling each unit in the information processing apparatus 30.

The controller 34 is configured to generate an environment map from point-set data generated by the range finder 10. The controller 34 is configured to acquire an attitude of the range finder 10 to generate the environment map. The controller 34 is able to acquire the attitude of the range finder 10 by deriving an amount of movement of a subject from the point-set data generated by the range finder 10. However, for example, while the mobile unit is moving on a snowfield, no object or the like having an uneven surface is present in the measurement range of the range finder 10 in some cases. In this case, the point-set data generated by the range finder 10 is unlikely to include any features. A feature in the point-set data generated by the range finder 10 is a point set having a shape able to match a shape of another point set. When the point-set data does not include any features, the controller 34 is unable to accurately deduce the attitude of the range finder 10. An image generated by the imaging device 20 is likely to include more features than the point-set data generated by the range finder 10 because the image contains information regarding luminance or the like. A feature in the image generated by the imaging device 20 is a portion that is more conspicuous than other neighboring portions in a picture corresponding to a subject in the image and that is identifiable by image processing. Thus, the controller 34 is configured to calculate an amount of change in the attitude of the imaging device 20 by applying image processing to the image generated by the imaging device 20. As described above, the attitude of the range finder 10 and the attitude of the imaging device 20 are linked to each other. Accordingly, the controller 34 is able to acquire an amount of change in the attitude of the range finder 10, which is linked to the attitude of the imaging device 20, by calculating the amount of change in the attitude of the imaging device 20. Description will be given below with regard to a process of generating an environment map according to an embodiment.

The imaging device 20 generates a first image and a second image in respective attitudes that differ from each other, and the controller 34 acquires data representing the first image and data representing the second image. **In** an embodiment, the first image and the second image are generated at respective times that differ from each other, and the controller 34 receives from the imaging device 20 via the communicator 31 the data representing the first image and the data representing the second image. Since the mobile unit including or carrying the imaging device 20 moves, the data representing the first image and the data representing the second image that are generated at respective times that differ from each other are the data representing the first image and the data representing the second image that are generated while the imaging device 20 is in respective attitudes that differ from each other. **In** summary, by receiving the data representing the first image and the data representing the second image that are generated at respective times that differ from each other, the controller 24 acquires the data representing the first image and the data representing the second image that are generated while the imaging device 20 is in respective attitudes that differ from each other. **In** an embodiment, the controller 34 continues to receive data representing images from the imaging device 20 via the communicator 31 at predetermined intervals and thus receives the data representing the first image and the data representing the second image. The interval may be set based on the frame rate for the imaging device 20. For example, the interval may be equal to a reciprocal of the frame rate for the imaging device 20. Alternatively, the interval may be set based on an average speed of the mobile unit including or carrying the generation system 1. For a process described below, the controller 34 receives via the communicator 31 point-set data generated at the same time as the first image and point-set data generated at the same time as the second image. **In** an embodiment, the point-set data generated within a predetermined period before or after the time that the first image or the second image is generated may be regarded as the point-set data generated at the same time as the first image or at the same time as the second image. **In** an embodiment, the controller 34 receives the point-set data from the range finder 10 as well as receiving the data representing images from the imaging device 20 at the intervals described above and thus receives the point-set data generated at the same time as the first image and the point-set data generated at the same time as the second image. Upon generating an image, the imaging device 20 transmits the generated image to the information processing apparatus 30, and thus a time that the image is received from the imaging device 20 may be regarded as a time that the imaging device 20 generates the image. Upon generating point-set data, the range finder 10 transmits the point-set data to the information processing apparatus 30, and thus a time that the point-set data is received from the range finder 10 may be regarded as a time that the range finder 10 generates the point-set data.

In the following description, the first image is assumed to be generated at time $T_{N-1}$ (N being an integer equal to or larger than 2). The first image is also denoted by the first image ($T_{N-1}$). The second image is assumed to be generated at time $T_N$ (N being an integer equal to or larger than 2). The second image is also denoted by the second image ($T_N$). The interval between time $T_N$ and time $T_{N-1}$ is the predetermined interval described above.

The controller 34 acquires an amount of change in the attitude of the range finder 10 by calculating an amount of change in the attitude of the imaging device 20 based on the positions of the same subject in the first image and in the second image.

In an embodiment, the controller 34 calculates the amount of change regarding the imaging device 20 based on a difference between the positions of the same subject in the first image ($T_{N-1}$) and in the second image ($T_N$). The controller 34 acquires an amount of shift $dx_N$ and an amount of shift $dy_N$ as a difference between the positions of the same subject in the first image ($T_{N-1}$) and in the second image ($T_N$). The amount of shift $dx_N$ is a difference between the positions of the subject in the first image ($T_{N-1}$) and in the second image ($T_N$) along the x-axis in the xy coordinate system. The amount of shift $dx_N$ is represented, for example, by the number of pixels. The amount of shift $dy_N$ is a difference between the positions of the subject in the first image ($T_{N-1}$) and in the second image ($T_N$) along the y-axis in the xy coordinate system. The amount of shift $dy_N$ is represented, for example, by the number of pixels.

The controller 34 acquires the amount of shift $dx_N$ and the amount of shift $dy_N$ by applying a template matching process to the first image ($T_{N-1}$) and the second image ($T_N$). The controller 34 may acquire the amount of shift $dx_N$ and the amount of shift $dy_N$ by applying any process. In another example, the controller 34 may acquire the amount of shift $dx_N$ and the amount of shift $dy_N$ by applying a feature-point matching process to the first image ($T_{N-1}$) and the second image ($T_N$).

In the template matching process, the controller 34 designates a portion of the first image ($T_{N-1}$) as a template picture. The controller 34 calculates a correlation value representing a correlation between the template picture and a partial image onto which the template picture is superimposed in the second image ($T_N$). The controller 34 may calculate the correlation value using any algorithm, such as ZNCC (zero means normalized cross correlation). In an embodiment, a higher correlation value indicates a higher correlation between the template picture and the partial image onto which the template picture is superimposed in the second image ($T_N$). When the correlation value exceeds a correlation threshold, the controller 34 detects the partial image as a portion resembling the template picture in the second image ($T_N$). The correlation threshold may be set in advance based on data regarding images in the past. The controller 34 acquires the amount of shift $dx_N$ and the amount of shift $dy_N$ from a difference between xy coordinates of the template picture in the first image ($T_{N-1}$) and xy coordinates of the partial image resembling the template picture in the second image ($T_N$). For example, the controller 34 calculates a difference between xy coordinates of a center of the template picture in the first image ($T_{N-1}$) and xy coordinates of a center of the partial image resembling the template picture in the second image ($T_N$) and acquires the calculated difference as the amount of shift $dx_N$ and the amount of shift $dy_N$. When multiple correlation values exceed the correlation threshold, the controller 34 may select the largest correlation value from the multiple correlation values exceeding the correlation threshold and adopt the amount of shift $dx_N$ and the amount of shift $dy_N$ corresponding to the selected correlation value. Alternatively, the controller 34 may select the largest correlation value from multiple calculated correlation values, and when the selected correlation value exceeds the correlation threshold, the controller 34 may adopt the amount of shift $dx_N$ and the amount of shift $dy_N$ corresponding to the selected correlation value.

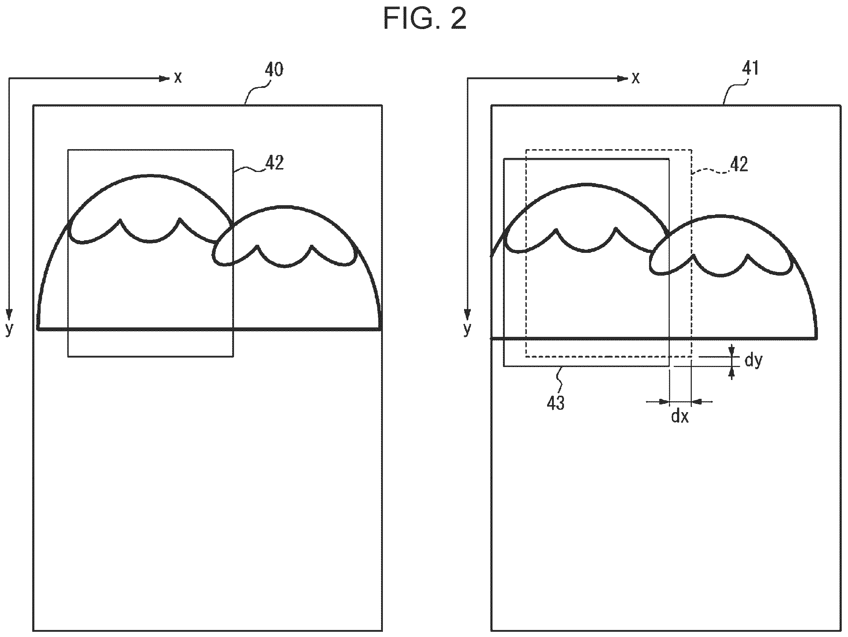

For example, the controller 34 receives from the imaging device 20 data regarding a first image 40 and data regarding a second image 41 as illustrated in FIG. 2. The first image 40 and the second image 41 each capture scenery of mountains and a snowfield near the mobile unit. The first image 40 contains a template picture 42. A position of the template picture 42 is indicated by a dashed line in the second image 41 for convenience. The controller 34 detects a partial image 43 resembling the template picture 42 in the second image 41. The controller 34 acquires the amount of shift $dx_N$ and the amount of shift $dy_N$ from a difference between xy coordinates of the template picture 42 and xy coordinates of the partial image 43.

The template picture may be a picture of an area designated in advance in the area of the first image. In one example, an area corresponding to a location on a far side from the imaging device 20 in the area of the first image may be designated in advance as an area of the template picture. Scenery of mountains or the like is more likely to be captured in the area corresponding to a location on a far side from the imaging device 20 in the first image than in an area corresponding to a location near the imaging device 20 in the first image. An area in which the scenery of mountains or the like is likely to be captured in the first image may be identified based on data regarding images generated in the past, and the identified area may be designated in advance as an area of the template picture. For example, while the mobile unit is moving on a snowfield, only snow is likely to be captured in the area corresponding to a location near the imaging device 20 in the first image. In this case, the area corresponding to a location near the imaging device 20 in the first image is unlikely to include any features. In contrast, even while the mobile unit is moving on a snowfield, the scenery of mountains or the like is likely to be captured in the area corresponding to a location on a far side from the imaging device 20 in the first image. A portion in which the scenery of mountains or the like is captured in the first image is likely to provide a feature. Accordingly, since the area corresponding to a location on a far side from the imaging device 20 in the area of the first image is designated in advance as the area of the template picture, the template picture is more likely to contain features. Such a procedure enables a reduction in a time for the controller 34 to detect a partial image resembling the template picture in the second image in the template matching process. Such a procedure also enables the controller 34 to accurately detect a partial image resembling the template picture in the second image in the template process.

The template picture may be a partial image selected by the controller 34 in the first image. **In** this case, the controller 34 may identify a partial image corresponding to a location on a far side from the imaging device 20 in the first image based on point-set data generated at the same time as the first image. The controller 34 may select the identified partial image as the template picture. Namely, the controller 34 may designate the identified partial image as the template picture. The scenery of mountains or the like is more likely to be captured in the partial image corresponding to a location on a far side from the imaging device 20 in the first image than in a partial image corresponding to a location near the imaging device 20 in the first image. In one example, when the imaging range of the imaging device 20 at least partially overlaps the measurement range of the range finder 10, the controller 34 may use point-set data generated at the same time as the first image to identify an area in the area of the first image where the range finder 10 is unable to measure a distance to an object (a range beyond a predetermined distance from the imaging device 20). When a distance from the range finder 10 to an object exceeds a range within which the range finder 10 is able to measure a distance, the range finder 10 is unable to measure the distance to the object. Namely, the area where the range finder 10 is unable to measure the distance to the object is likely to be located on a far side from the imaging device 20. The controller 34 may designate as the template picture a partial image in an area corresponding to a location farther away from the imaging device 20 than the area where the range finder 10 is unable to measure the distance to the object in the first image.

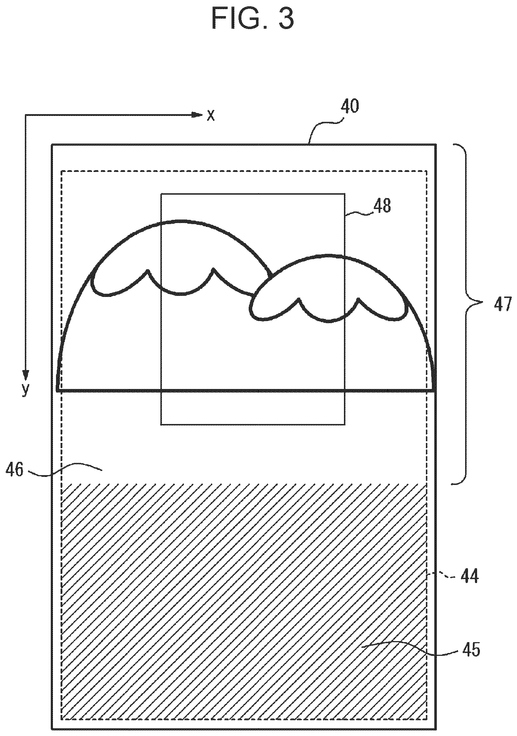

For example, in FIG. 3, a portion of the imaging range of the imaging device 20 overlaps the measurement range of the range finder 10. A region 44 contained in the first image 40 corresponds to the measurement range of the range finder 10. An area 45 having a hatching pattern in the region 44 is an area where the range finder 10 is able to measure a distance to an object. An area 46 having no hatching pattern in the region 44 is an area where the range finder 10 is unable to measure a distance to an object. The controller 34 designates as the template picture in the first image a partial image in an area 47 corresponding to a location farther away from the imaging device 20 than the area 45 is. A template picture 48 is an example of a partial image in the area 47 corresponding to a location farther away from the imaging device 20 than the area 45 is.

A size of the template picture may be set in advance based on data such as a size of the subject in the first image. Alternatively, the size of the template picture may be set by the controller 34. In this case, the controller 34 may acquire information regarding a speed of the range finder 10 and set the size of the template picture based on the acquired information regarding the speed. In an embodiment, the information regarding the speed of the range finder 10 is information regarding a speed of the mobile unit including or carrying the range finder 10. The controller 34 may set the size of the template picture in such a manner that the size decreases as the speed of the range finder 10, that is, the speed of the mobile unit, increases in an embodiment. The controller 34 may acquire the information regarding the speed of the mobile unit from a speed sensor included in or carried by the mobile unit. The controller 34 may use LiDAR odometry technology to estimate an amount of movement of the mobile unit using measured data received from the range finder 10 and acquire the information regarding the speed of the mobile unit based on the estimated amount of movement. The controller 34 may use visual odometry technology to estimate an amount of movement of the mobile unit using a change in images received from the imaging device 20 at predetermined intervals and acquire the information regarding the speed of the mobile unit based on the estimated amount of movement. The controller 34 may receive the information regarding the speed of the mobile unit by communicating with another system in the mobile unit via the communicator 31. Since the size of the template picture is set based on the information regarding the speed of the range finder 10, the controller 34 is able to detect a partial image resembling the template picture in the template matching process. For example, since the size of the template picture is reduced as the mobile unit moves faster, the controller 34 is able to detect a partial image resembling the template picture in the template matching process for the mobile unit moving fast.

Upon acquiring the amount of shift $dx_N$ and the amount of shift $dy_N$, the controller 34 calculates a rotation angle $\theta_{YN}$ and a rotation angle $\theta_{PN}$ of the imaging device 20 as the amount of change in the attitude of the imaging device 20.

The rotation angle $\theta_{YN}$ is a rotation angle $\theta_Y$ of the imaging device 20 at time $T_N$ in relation to a rotation angle $\theta_Y$ of the imaging device 20 at a first time point. The rotation angle $\theta_Y$ is a rotation angle around an axis parallel to the vertical direction. To describe an attitude of an object, a roll angle, a pitch angle, and a yaw angle are used, and the rotation angle $\theta_Y$ corresponds to a yaw angle. The first time point is used to set a world coordinate system as described below. In an embodiment, the first time point is set to time $T_1$. However, the first time point may be set in any way.

The rotation angle $\theta_{PN}$ is a rotation angle $\theta_P$ of the imaging device 20 at time $T_N$ in relation to a rotation angle $\theta_P$ of the imaging device 20 at the first time point, that is, time $T_1$. The rotation angle $\theta_P$ is a rotation angle around an axis parallel to the horizontal direction. The rotation angle $\theta_P$ corresponds to a pitch angle among a roll angle, a pitch angle, and a yaw angle used to describe an attitude of an object.

Using Equations (1) and (2) below, the controller 34 calculates the rotation angle $\theta_{YN}$ and the rotation angle $\theta_{PN}$ of the imaging device 20.

$$\theta_{YN} = dx_N \times (Hdeg/Hpixel) + \theta_{Y(N-1)} \qquad \text{Equation (1)}$$

$$\theta_{PN} = dy_N \times (Vdeg/Vpixel) + \theta_{P(N-1)} \qquad \text{Equation (2)}$$

In Equation (1), a horizontal angle of view Hdeg is a horizontal angle of view of the imaging device 20. The number of pixels Hpixel is the number of pixels aligned in the x-axis direction in the first image. When N = 2, $\theta_{Y(N-1)}$ on the right-hand side, that is, $\theta_{Y1}$, is zero.

In Equation (2), a vertical angle of view Vdeg is a vertical angle of view of the imaging device 20. The number of pixels Vpixel is the number of pixels aligned in the y-axis direction in the first image. When N = 2, $\theta_{P(N-1)}$ on the right-hand side, that is, $\theta_{P2}$, is zero.

Upon calculating the rotation angle $\theta_{YN}$ and the rotation angle $\theta_{PN}$ of the imaging device 20, the controller 34 converts positional information of an object included in the point-set data generated at time $T_N$ in the local coordinate system into positional information in the world coordinate system. The world coordinate system provides coordinates that are set up based on a real space outside the range finder 10. In an embodiment, the local coordinate system of the range finder 10 at the first time point, that is, time $T_1$ is adopted as the world coordinate system. In the following description, time $T_N$ (N being an integer equal to or larger than 2), which differs from the first time point, is also denoted by a second time point. In the following description, positional information (X, Y, Z) of the object included in the point-set data generated at time $T_N$ in the local coordinate system is also denoted by positional information $(X_N, Y_N, Z_N)$.

Using Equation (3) below, the controller 34 converts the positional information $(X_N, Y_N, Z_N)$ of the object included in the point-set data generated at time $T_N$ in the local coordinate system into positional information $(X_1, Y_1, Z_1)$ in the world coordinate system, that is, in the local coordinate system of the range finder 10 at the first time point.

[Math 1]

$$\begin{bmatrix} X_1 \\ Y_1 \\ Z_1 \end{bmatrix} = \begin{bmatrix} 1 & 0 & 0 \\ 0 & cos(\theta_{PN}) & sin(\theta_{PN}) \\ 0 & -sin(\theta_{PN}) & cos(\theta_{PN}) \end{bmatrix} \begin{bmatrix} cos(\theta_{YN}) & 0 & -sin(\theta_{YN}) \\ 0 & 1 & 0 \\ sin(\theta_{YN}) & 0 & cos(\theta_{YN}) \end{bmatrix} \begin{bmatrix} X_N \\ Y_N \\ Z_N \end{bmatrix}$$

Equation (3)

The controller 34 may continue to receive images and point-set data from the imaging device 20 and the range finder 10, respectively, at the intervals described above and repeatedly perform the above process. In other words, the controller 34 may continue to generate environment maps by continuing to convert the positional information $(X_N, Y_N, Z_N)$ of the object included in the point-set data generated at time $T_N$ in the local coordinate system into the positional information $(X_1, Y_1, Z_1)$ in the local coordinate system of the range finder 10 at the first time point. The controller 34 may cause a display of the output unit 32 to present generated environment maps. The controller 34 may cause the output unit 32 to output generated environment maps to an external storage medium.

(Operation of Generation System)

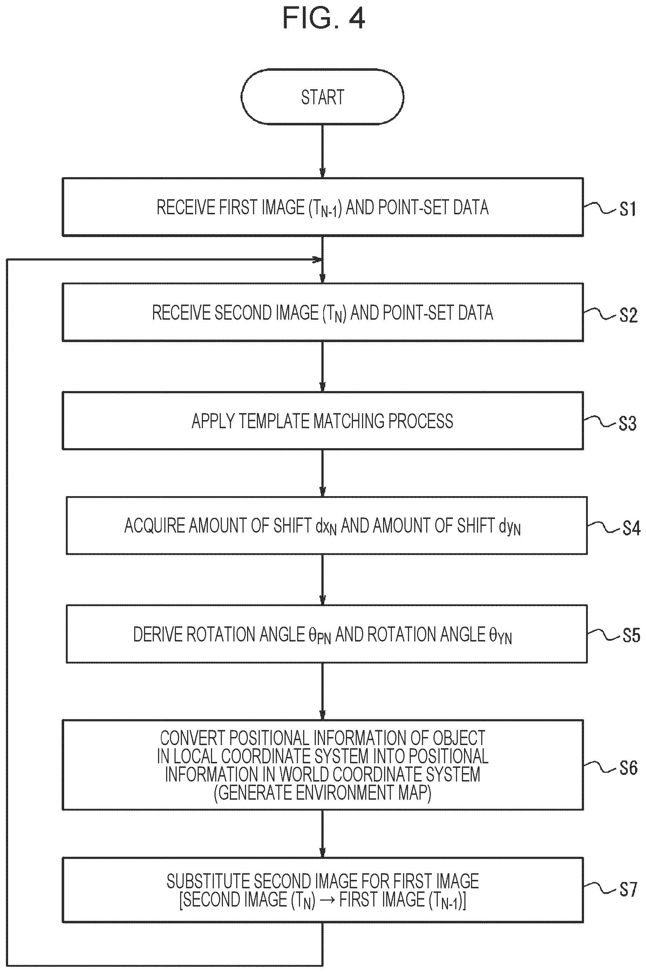

FIG. 4 is a flowchart indicating an example of procedures in a process of generating an environment map. The process of generating an environment map corresponds to an example of a method of processing information according to an embodiment. For example, in response to the mobile unit starting to move, the controller 34 starts the process of generating an environment map. The controller 34 may detect the mobile unit starting to move by communicating with another system in the mobile unit via the communicator 31.

The controller 34 receives point-set data from the range finder 10 via the communicator 31 as well as receiving data representing the first image $(T_{N-1})$ from the imaging device 20 via the communicator 31 (step S1). The first image $(T_{N-1})$ and the point-set data are generated at the same time, that is, at time $T_{N-1}$.

The controller 34 receives point-set data from the range finder 10 via the communicator 31 as well as receiving data representing the second image $(T_N)$ from the imaging device 20 via the communicator 31 (step S2). The second image $(T_N)$ and the point-set data are generated at the same time, that is, at time $T_N$.

The controller 34 applies the template matching process to the first image $(T_{N-1})$ and the second image $(T_N)$ (step S3). The controller 34 acquires the amount of shift $dx_N$ and the amount of shift $dy_N$ by applying the template matching process (step S4).

Using Equations (1) and (2), the controller 34 derives the rotation angle $\theta_{YN}$ and the rotation angle $\theta_{PN}$ of the imaging device 20 from the amount of shift $dx_N$ and the amount of shift $dy_N$ acquired in the process in step S4 (step S5).

Using the rotation angle $\theta_{YN}$ and the rotation angle $\theta_{PN}$ of the imaging device 20 derived in the process in step S5 and Equation (3), the controller 34 converts positional information of the object included in the point-set data received in the process in step S2 in the local coordinate system into positional information in the world coordinate system (step S6). The controller 34 generates an environment map by converting the positional information of the object included in the point-set data in the local coordinate system into the positional information in the world coordinate system.

The controller 34 substitutes the second image $(T_N)$ received in the process in step S2 for the first image $(T_{N-1})$ (step S7). After the process in step S7, the controller 34 performs the process in step S2 again. In the process in step S2 performed again, the controller 34 newly receives the second image $(T_N)$.

In the process in step S3 described above, the controller 34 may select and set a template picture from the first image whenever applying the template matching process. Alternatively, when a setting condition is satisfied, the controller 34 may select and set a template picture from the first image. The setting condition may be a requirement that the correlation value described above is equal to or less than the correlation threshold. In this case, when the correlation value is equal to or less than the correlation threshold, the controller 34 may identify a partial image corresponding to a location on a far side from the imaging device 20 in the first image based on point-set data generated at the same time as the first image. When the correlation value is equal to or less than the correlation threshold for the whole of the second image, the controller 34 may identify a partial image corresponding to a location on a far side from the imaging device 20 in the first image based on point-set data generated at the same time as the first image. The controller 34 may designate the identified partial image as the template picture. Upon newly designating the template picture, the controller 34 may apply the template matching process again. Such a procedure enables the controller 34 to accurately identify a partial image resembling the template picture in the second image in the template process.

For example, in response to the mobile unit halting, the controller 34 ends the process of generating an environment map as illustrated in FIG. 4. The controller 34 may detect the mobile unit halting by communicating with another system in the mobile unit via the communicator 31.

In this way, in an embodiment, the controller 34 in the information processing apparatus 30 is configured to calculate the amount of change in the attitude of the imaging device 20 based on the positions of the same subject in the first image and in the second image. The controller 34 is configured to acquire the amount of change in the attitude of the range finder 10, which is linked to the attitude of the imaging device 20, by calculating the amount of change in the attitude of the imaging device 20. As described above, for example, while the mobile unit is moving on a snowfield, no object or the like having an uneven surface is present in the measurement range of the range finder 10 in some cases. In this case, since a two-dimensional image extracted from point-set data is unlikely to contain any features, the controller 34 is unable to accurately deduce the attitude of the range finder 10 by applying image processing to the extracted two-dimensional image. In an embodiment, the controller 34 is configured to acquire the amount of change in the attitude of the range finder 10, which is linked to the attitude of the imaging device 20, by calculating the amount of change in the attitude of the imaging device 20 using the first image and the second image generated by the imaging device 20. Such a procedure enables the amount of change in the attitude of the range finder 10 to be accurately estimated when no object or the like having an uneven surface is present in the measurement range of the range finder 10. Accordingly, in an embodiment, a technology is provided to accurately deduce information regarding the attitude of the range finder 10.

In an embodiment, the controller 34 may receive point-set data corresponding to the first image from the range finder 10 via the communicator 31 and thus acquire the point-set data. The point-set data corresponding to the first image may be generated at the same time as the first image. The point-set data corresponding to the first image may be generated by the range finder 10 while the imaging device 20 is in an attitude to generate the first image. The controller 34 may set a predetermined distance based on the point-set data. The predetermined distance may be a distance from which the range finder 10 is unable to acquire point-set data. The controller 34 may calculate the amount of change in the attitude of the imaging device 20 based on the positions of a subject in the first image and in the second image, the subject being located at a distance greater than the predetermined distance from the imaging device 20. When applying the template matching process, as described above, the controller 34 may designate as the template picture a partial image corresponding to a location on a far side and detect the subject located at a distance greater than the predetermined distance from the imaging device 20. A partial image corresponding to a location near the imaging device 20 in the first image is unlikely to include any features. For example, while the mobile unit is moving on a snowfield, only snow is likely to be captured in the partial image corresponding to a location near the imaging device 20 in the first image. In contrast, a partial image corresponding to a location on a far side from the imaging device 20 in the first image is likely to include a feature. For example, even while the mobile unit is moving on a snowfield, scenery of mountains or the like is likely to be captured in a partial image corresponding to a location on a far side from the imaging device 20 in the first image. A portion in which the scenery of mountains or the like is captured in the first image is likely to provide a feature. Thus, designating as the template picture a partial image corresponding to a location on a far side from the imaging device 20 in the area of the first image leads to a higher possibility that the template picture includes a feature. Such a procedure enables a reduction in a time for the controller 34 to detect a partial image resembling the template picture in the second image in the template matching process. Such a procedure also enables the controller 34 to accurately detect a partial image resembling the template picture in the second image in the template process.

In an embodiment, for a subject located at a distance greater than the predetermined distance, when correlation between pictures of the subject in the first image and in the second image exceeds a predetermined value, the controller 34 may calculate the amount of change in the attitude of the imaging device 20 based on the positions of the subject in the first image and in the second image. When applying the template matching process, for a subject located at a distance greater than the predetermined distance, the controller 34 may calculate the correlation value described above to represent the correlation between the pictures of the subject in the first image and in the second image. When the calculated correlation value is equal to or less than a correlation threshold, which is a predetermined value, based on point-set data, the controller 34 may identify a partial image corresponding to a location on a far side from the imaging device 20 in the first image. The controller 34 may designate the identified partial image as the template picture. In summary, the controller 34 may designate as the template picture the identified partial image corresponding to a location on a far side of the imaging device 20 and thus calculate the amount of change in the attitude of the imaging device 20 based on the positions of the subject in the first image and in the second image, the subject being located at a distance greater than the predetermined distance. Such a procedure enables the controller 34 to accurately detect a partial image resembling the template picture in the second image in the template process.

In an embodiment, the controller 34 may receive first data and second data from the range finder 10 and thus acquire the first data and the second data. The first data is point-set data generated by the range finder 10 while the imaging device 20 is in an attitude to generate the first image. The second data is point-set data generated by the range finder 10 while the imaging device 20 is in an attitude to generate the second image. The first data may be point-set data generated at the same time as the first image, that is, at the first time point. The second data may be point-set data generated at the same time as the second image, that is, at the second time point. The controller 34 may adjust positional relationship between positions of an object represented by the first data and by the second data based on the acquired amount of change in the attitude of the range finder 10. The controller 34 may generate an environment map based on the position of the object obtained after the positional relationship is adjusted. As described above, if the first time point is $T_1$ and the second time point is $T_N$ (N being an integer equal to or larger than 2), the amount of change in the attitude of the range finder 10 from the first time point to the second time point may be the rotation angle $\theta_{YN}$ and the rotation angle $\theta_{PN}$ of the imaging device 20. In this case, based on the rotation angle $\theta_{YN}$ and the rotation angle $\theta_{PN}$ of the imaging device 20, the controller 34 may adjust using Equation (3) positional relationship between positions of the object represented by the first data and by the second data. In other words, based on the rotation angle $\theta_{YN}$ and the rotation angle $\theta_{PN}$ of the imaging device 20, the controller 34 may convert using Equation (3) positional information of the object included in the point-set data in the local coordinate system into positional information in the local coordinate system of the range finder 10 at the first time point, that is, positional information in the world coordinate system. The world coordinate system may be the local coordinate system of the range finder 10 at the first time point. The controller 34 may generate an environment map by converting positional information of an object included in point-set data in the local coordinate system into positional information in the world coordinate system using an amount of change in the attitude of the range finder 10 from the first time point to the second time point. Since the local coordinate system of the range finder 10 at the first time point is designated as the world coordinate system, an environment map may be generated by a simple coordinate conversion as in Equation (3).

In an embodiment, the controller 34 may acquire information regarding a speed at which the range finder 10 changes the attitude and set a size of a picture of a subject based on the acquired information regarding the speed. The controller 34 may acquire the information regarding the speed of the range finder 10 as described above as the information regarding the speed at which the range finder 10 changes the attitude. The controller 34 may set the size of the picture of the subject to the size of the template picture. The controller 34 may set the size of the picture of the subject in such a manner that the picture of the subject decreases in size as the speed at which the range finder 10 changes the attitude increases. The controller 34 may set the size of the template picture in such a manner that the size decreases as the speed of the range finder 10 increases as described above. Since the size of the template picture is set based on the information regarding the speed of the range finder 10, the controller 34 is able to detect a partial image resembling the template picture in the template matching process. For example, since the size of the template picture is reduced as the range finder 10 moves faster, the controller 34 is able to detect a partial image resembling the template picture in the template matching process for the range finder 10 moving fast.

In an embodiment, (1) an information processing apparatus includes

a controller configured to acquire data representing a first image and data representing a second image, the first image and the second image being generated by an imaging device in respective attitudes that differ from each other.

The controller is configured to acquire an amount of change in an attitude of a range finder based on an amount of change in the attitude of the imaging device, the attitude of the range finder being linked to the attitude of the imaging device, the amount of change in the attitude of the imaging device being calculated based on positions of a same subject in the first image and in the second image.

(2) In the information processing apparatus described in (1),

the controller may be configured to
acquire positional data indicating a position of an object located around the range finder, and
calculate the amount of change in the attitude of the imaging device based on the positions of the subject in the first image and in the second image, the subject being located at a distance greater than a predetermined distance from the imaging device, the predetermined distance being a distance from which the range finder is unable to acquire the positional data.

(3) In the information processing apparatus described in (1) or (2),

the controller may be configured to
acquire the amount of change when a correlation between a picture of the subject in the first image and a picture of the subject in the second image exceeds a predetermined value, the subject being located at a distance greater than the predetermined distance.

(4) In the information processing apparatus described in any one of (1) to (3),

the controller may be configured to
acquire first data and second data from the range finder, the first data and the second data being positional data generated while the imaging device is in the attitude to generate the first image and the second image, respectively, and
based on the amount of change, adjust positional relationship between positions of an object represented by the first data and by the second data.

(5) In the information processing apparatus described in any one of (1) to (4),
the controller may be configured to generate an environment map based on a position of the object obtained after the positional relationship is adjusted.

(6) In the information processing apparatus described in any one of (1) to (5),
the controller may be configured to set a size of a picture of the subject based on a speed at which the attitude of the range finder changes.

(7) In the information processing apparatus described in any one of (1) to (6),
the controller may be configured to set the size of the picture of the subject in such a manner that the size of the picture decreases as the speed at which the attitude of the range finder changes increases.

(8) In the information processing apparatus described in any one of (1) to (7),

the controller may be configured to acquire a difference between the positions of the same subject in the first image and in the second image by applying a template matching process to the first image and the second image, and the template matching process is configured to detect in the second image a partial image resembling a portion of the first image designated as a template picture.

In an embodiment, (9) a method of processing information includes

acquiring data representing a first image and data representing a second image, the first image and the second image being generated by an imaging device in respective attitudes that differ from each other, and

acquiring an amount of change in an attitude of a range finder based on an amount of change in the attitude of the imaging device, the attitude of the range finder being linked to the attitude of the imaging device, the amount of change in the attitude of the imaging device being calculated based on positions of a same subject in the first image and in the second image.

In an embodiment, (10) a program causes a computer to execute a process, the process including

acquiring data representing a first image and data representing a second image, the first image and the second image being generated by an imaging device in respective attitudes that differ from each other, and

acquiring an amount of change in an attitude of a range finder based on an amount of change in the attitude of the imaging device, the attitude of the range finder being linked to the attitude of the imaging device, the amount of change in the attitude of the imaging device being calculated based on positions of a same subject in the first image and in the second image.

An embodiment of the present disclosure has been described based on the drawings and the example. Note that those skilled in the art easily make various changes or corrections based on the present disclosure. Accordingly, note that those changes or corrections are within the scope of the present disclosure. For example, a function or the like included in each functional unit may be rearranged in a logically compatible manner. Combining multiple functional units or the like into one or dividing a functional unit or the like is possible. An embodiment according to the present disclosure described above need not be practiced so as to literally conform to the description of an embodiment, and each feature may be combined with another feature or may be partially omitted as appropriate in practicing an embodiment. In short, based on the present disclosure, those skilled in the art are able to make various changes and corrections to the content of the present disclosure. Accordingly, those changes and corrections are within the scope of the present disclosure. For example, each functional unit, each method, each step, and the like in an embodiment may be added to another embodiment or may be replaced by a functional unit, a method, a step, and the like in another embodiment in a logically compatible manner. Combining multiple functional units, multiple methods, multiple steps, and the like into one or dividing a functional unit, a method, a step, and the like is possible in an embodiment. An embodiment according to the present disclosure described above need not be practiced so as to literally conform to the description of an embodiment, and each feature may be combined with another feature or may be partially omitted as appropriate in practicing an embodiment.

For example, in an embodiment described above, description has been given on the assumption that the first time point is time $T_1$. The first time point is not limited to time $T_1$. The first time point may be different from time $T_1$. For example, the first time point may be time $T_{M+1}$ (M being an integer equal to or larger than 1). In this case, the second time point differs from time $T_{M+1}$.

For example, in an embodiment described above, description has been given on the assumption that the imaging device 20 includes imaging optics and an imaging element. The configuration of the imaging device 20 is not limited to the one described above. The imaging device 20 may be of any type as long as generating an image having luminance is possible, that is, generating an image to which the template matching process may be applied is possible. For example, the imaging device 20 may be an infrared camera.

For example, the controller 34 may acquire an amount of movement of the range finder 10 from time $T_1$ to time $T_N$ using the method described above. The controller 34 may acquire a translation vector of the range finder 10 from time $T_1$ to time $T_N$ based on the acquired amount of movement. The controller 34 may add the acquired translation vector to the right-hand side of Equation (3).

For example, in an embodiment, a general-purpose computer may be caused to serve as the information processing apparatus 30 in an embodiment described above. In one example, a memory in the general-purpose computer stores a program describing a process to implement each function of the information processing apparatus 30 according to the above embodiment, and a processor is caused to load and execute the program. Accordingly, the present disclosure may be implemented in a form of a program executable by the processor or a non-transitory computer-readable medium storing the program.

In the present disclosure, expressions such as "first" and "second" are identifiers to distinguish the configurations. Ordinal numbers may be exchanged between the configurations distinguished by the expressions such as "first" and "second" in the present disclosure. For example, the identifiers "first" and "second" may be exchanged between the first image and the second image. The identifiers are exchanged simultaneously. The configurations are distinguished after the exchange of the identifiers. The identifiers may be removed. The configurations are distinguished by symbols after the identifiers are removed. Neither the order of the configurations nor the presence of an identifier having a small number is to be assumed only based on the expressions of the identifiers such as "first" and "second" in the present disclosure.

REFERENCE SIGNS

```
1 generation system
10 range finder
20 imaging device
30 information processing apparatus
31 communicator
32 output unit
33 storage
34 controller
40 first image
41 second image
42, 48 template picture
43 partial image
44 region
45, 46, 47 area
```

**Claims**

1.  An information processing apparatus comprising:

    a controller configured to acquire data representing a first image and data representing a second image, the first image and the second image being generated by an imaging device in respective attitudes that differ from each other,
    wherein the controller is configured to acquire an amount of change in an attitude of a range finder based on an amount of change in the attitude of the imaging device, the attitude of the range finder being linked to the attitude of the imaging device, the amount of change in the attitude of the imaging device being calculated based on positions of a same subject in the first image and in the second image.

2.  The information processing apparatus according to claim 1,

    wherein the controller is configured to
    acquire positional data indicating a position of an object located around the range finder, and
    calculate the amount of change in the attitude of the imaging device based on the positions of the subject in the first image and in the second image, the subject being located at a distance greater than a predetermined distance from the imaging device, the predetermined distance being a distance from which the range finder is unable to acquire the positional data.

3.  The information processing apparatus according to claim 2,

    wherein the controller is configured to
    acquire the amount of change when a correlation between a picture of the subject in the first image and a picture of the subject in the second image exceeds a predetermined value, the subject being located at a distance greater than the predetermined distance.

4.  The information processing apparatus according to any one of claims 1 to 3,

    wherein the controller is configured to

acquire first data and second data from the range finder, the first data and the second data being positional data generated while the imaging device is in the attitude to generate the first image and the second image, respectively, and

based on the amount of change, adjust positional relationship between positions of an object represented by the first data and by the second data.

5. The information processing apparatus according to claim 4,
wherein the controller is configured to generate an environment map based on a position of the object obtained after the positional relationship is adjusted.

6. The information processing apparatus according to claim 3,
wherein the controller is configured to set a size of a picture of the subject based on a speed at which the attitude of the range finder changes.

7. The information processing apparatus according to claim 6,
wherein the controller is configured to set the size of the picture of the subject in such a manner that the size of the picture decreases as the speed at which the attitude of the range finder changes increases.

8. The information processing apparatus according to claim 1,

wherein the controller is configured to acquire a difference between the positions of the same subject in the first image and in the second image by applying a template matching process to the first image and the second image, and

the template matching process is configured to detect in the second image a partial image resembling a portion of the first image designated as a template picture.

9. A method of processing information, the method comprising:

acquiring data representing a first image and data representing a second image, the first image and the second image being generated by an imaging device in respective attitudes that differ from each other, and

acquiring an amount of change in an attitude of a range finder based on an amount of change in the attitude of the imaging device, the attitude of the range finder being linked to the attitude of the imaging device, the amount of change in the attitude of the imaging device being calculated based on positions of a same subject in the first image and in the second image.

10. A program causing a computer to execute a process, the process comprising:

acquiring data representing a first image and data representing a second image, the first image and the second image being generated by an imaging device in respective attitudes that differ from each other, and

acquiring an amount of change in an attitude of a range finder based on an amount of change in the attitude of the imaging device, the attitude of the range finder being linked to the attitude of the imaging device, the amount of change in the attitude of the imaging device being calculated based on positions of a same subject in the first image and in the second image.

# FIG. 1

1

30

**INFORMATION PROCESSING APPARATUS**

10

| RANGE FINDER |

20

| IMAGING DEVICE |

| COMMUNICATOR |  ~ 31

| OUTPUT UNIT |  ~ 32

| STORAGE |  ~ 33

| CONTROLLER |  ~ 34

# FIG. 2

EP 4 571 245 A1

# FIG. 3

# FIG. 4

START

RECEIVE FIRST IMAGE ($T_{N-1}$) AND POINT-SET DATA — S1

RECEIVE SECOND IMAGE ($T_N$) AND POINT-SET DATA — S2

APPLY TEMPLATE MATCHING PROCESS — S3

ACQUIRE AMOUNT OF SHIFT $dx_N$ AND AMOUNT OF SHIFT $dy_N$ — S4

DERIVE ROTATION ANGLE $\theta_{PN}$ AND ROTATION ANGLE $\theta_{YN}$ — S5

CONVERT POSITIONAL INFORMATION OF OBJECT IN LOCAL COORDINATE SYSTEM INTO POSITIONAL INFORMATION IN WORLD COORDINATE SYSTEM (GENERATE ENVIRONMENT MAP) — S6

SUBSTITUTE SECOND IMAGE FOR FIRST IMAGE [SECOND IMAGE ($T_N$) → FIRST IMAGE ($T_{N-1}$)] — S7

## INTERNATIONAL SEARCH REPORT

| International application No. |
|---|
| **PCT/JP2023/028139** |

| A. | CLASSIFICATION OF SUBJECT MATTER |
|---|---|

*G01C 3/00*(2006.01)i; *G01C 3/06*(2006.01)i; *G05D 1/02*(2020.01)i; *G06T 7/70*(2017.01)i
FI: G01C3/00 120; G01C3/06 120Q; G05D1/02 K; G06T7/70 Z

According to International Patent Classification (IPC) or to both national classification and IPC

| B. | FIELDS SEARCHED |
|---|---|

Minimum documentation searched (classification system followed by classification symbols)

G01C3/00; G01C3/06; G01C7/04; G05D1/02; G06T7/70; G06T7/80; G08G1/16; G01S7/497

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2011-196916 A (MITSUBISHI ELECTRIC CORP.) 06 October 2011 (2011-10-06) paragraphs [0010]-[0012], fig. 1, 2 | 1, 4-5, 8-10 |
| A | | 2-3, 6-7 |
| Y | JP 2022-39719 A (TOSHIBA CORP.) 10 March 2022 (2022-03-10) paragraphs [0053]-[0075], fig. 5 | 1, 4-5, 8-10 |
| A | JP 2022-75500 A (CANON INC.) 18 May 2022 (2022-05-18) entire text | 1-10 |
| A | WO 2019/098318 A1 (PANASONIC INTELLECTUAL PROPERTY CORPORATION OF AMERICA) 23 May 2019 (2019-05-23) entire text | 1-10 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 September 2023** | **12 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

EP 4 571 245 A1

## INTERNATIONAL SEARCH REPORT
### Information on patent family members

International application No.

**PCT/JP2023/028139**

| Patent document cited in search report | | | Publication date (day/month/year) | Patent family member(s) | | | Publication date (day/month/year) |
|---|---|---|---|---|---|---|---|
| JP | 2011-196916 | A | 06 October 2011 | (Family: none) | | | |
| JP | 2022-39719 | A | 10 March 2022 | US | 2022/0067961 | A1 | |
| | | | | paragraphs [0082]-[0104], fig. 5 | | | |
| JP | 2022-75500 | A | 18 May 2022 | US | 2022/0137626 | A1 | |
| | | | | entire text | | | |
| WO | 2019/098318 | A1 | 23 May 2019 | US | 2020/0278450 | A1 | |
| | | | | entire text | | | |
| | | | | EP | 3716210 | A1 | |
| | | | | CN | 111373442 | A | |

Form PCT/ISA/210 (patent family annex) (January 2015)

**REFERENCES CITED IN THE DESCRIPTION**

**Patent documents cited in the description**

- JP 2022129066 A

- JP 2020086678 A